Europäisches Patentamt

European Patent Office

Office européen des brevets

(19)

(11) EP 0 782 761 B1

(12) EUROPÄISCHE PATENTSCHRIFT

(45) Veröffentlichungstag und Bekanntmachung des
Hinweises auf die Patenterteilung:
**12.08.1998 Patentblatt 1998/33**

(51) Int Cl.⁶: **H01H 83/14**, H01F 27/25,
H02H 3/33

(21) Anmeldenummer: **95932005.2**

(22) Anmeldetag: **07.09.1995**

(86) Internationale Anmeldenummer:
**PCT/EP95/03515**

(87) Internationale Veröffentlichungsnummer:
**WO 96/09639 (28.03.1996 Gazette 1996/14)**

(54) **DIFFERENZSTROMSCHUTZSCHALTER MIT BESONDEREM KERNMATERIAL**

DIFFERENTIAL CURRENT PROTECTIVE SWITCH WITH SPECIAL CORE MATERIAL

INTERRUPTEUR DE PROTECTION DIFFERENTIELLE POURVU D'UN MATERIAU POUR CIRCUIT
MAGNETIQUE SPECIAL

(84) Benannte Vertragsstaaten:
**AT BE CH DE ES FR GB IT LI NL PT SE**

(30) Priorität: **19.09.1994 EP 94114742**

(43) Veröffentlichungstag der Anmeldung:
**09.07.1997 Patentblatt 1997/28**

(73) Patentinhaber: **SIEMENS
AKTIENGESELLSCHAFT
80333 München (DE)**

(72) Erfinder:
• **BAUER, Bernhard
D-93053 Regensburg (DE)**
• **KLEEMEIER, Manfred
D-93073 Neutraubling (DE)**

(56) Entgegenhaltungen:
EP-A- 0 392 204          EP-A- 0 563 606
FR-A- 2 502 834          US-A- 5 110 378

• ELEKTRONIK, Bd. 22, Oktober 1987 MUNCHEN
DE, Seiten 99-112, R. BOLL ; H. R. HILZINGER
'Weichmagnetische kristalline und amorphe
Metalle'
• IEEE TRANSACTIONS ON MAGNETICS, Bd.
MAG-5, Nr. 3, September 1969 NEW YORK US,
Seiten 365-370, F. PFEIFER ; R. BOLL 'New Soft
Magnetic Alloys for Applications in Modern
Electrotechnics and Electronics'
• ELEKTROTECHNISCHE ZEITSCHRIFT - ETZ, Bd.
110, Nr. 12, Juni 1989 BERLIN DE, Seiten
580-584, XP 000035992 H. RÖSCH
'Fehlerstrom-Schutzschalter zum Schutz gegen
gefährliche Körperströme'

**Beschreibung**

Die Erfindung bezieht sich auf einen Differenzstromschutzschalter, DI-Schalter genannt, der mit Summenstromwandler und Auslöseeinrichtung in einem Sekundärkreis an der Sekundärwicklung des Summenstromwandlers arbeitet, im einzelnen nach Gattungsbegriff von Anspruch 1. Schaltkontakte für zu schützende Leiter sind im Primärkreis angeordnet.

DI-Schalter arbeiten mit elektronischer Auswertung bzw. Verstarkung und benötigen eine Spannungsversorgung für ihr Bordnetz. Sie ermöglichen es jedoch, außer Wechselfehlerströmen und pulsierenden Gleichfehlerströmen auch glatte Gleichfehlerströme durch besondere Abstimmung oder besondere Vorkehrungen zu erfassen und auszulösen. In der Praxis möchte man Einheiten vorsehen, die zur Erfassung von Wechselfehlerströmen und pulsierenden Gleichfehlerströmen abgestimmt sind und andere Einheiten, die zur Erfassung von glatten Gleichfehlerströmen eingerichtet sind. Hierbei ist es hinderlich, daß bei den herkömmlichen Summenstromwandlern auch die Einheiten, die auf die Erfassung von Wechselfehlerströmen und pulsierenden Fehlerströmen eingerichtet sind, durch glatte Gleichfehlerströme in ihrer Auslösung unempfindlicher werden.

Der Erfindung liegt die Aufgabe zugrunde, einen wechsel- oder wechsel- und pulsstromsensitiven DI-Schalter zu entwickeln, für dessen Summenstromwandler ein Kernmaterial bereitgestellt wird, das durch glatte Gleichfehlerströme innerhalb der Auslösegrenze einer gleichstromsensitiven Differenzstromeinrichtung in seiner Empfindlichkeit für Wechselfehlerströme und pulsierende Fehlerströme nicht unzulässig beeinflußt wird. Der Erfindung liegt weiter die Aufgabe zugrunde, einen Differenzstromschutzschalter zu entwickeln, dessen Nennfehlerstrom in weiten Bereichen, insbesondere zwischen 30 mA und 3 A, einstellbar ist, ohne das Konstruktionsprinzip bei der Einstellung auf verschiedene Nennfehlerströme verlassen werden müßte.

Die Lösung der geschilderten Aufgabe erfolgt durch einen DI-Schalter nach Anspruch 1. Danach weist der Summenstromwandler ein Kernmaterial mit folgenden Werten auf:

- die Remanenzinduktion nach Erregung mit $\hat{H} = 500$ mA/cm, Br, steht zur Induktion bei $\hat{H} = 500$ mA/cm, Bmax, in der Beziehung $\frac{Br}{Bmax} \leq 0,5$;
- die relative Permeabilität, $\mu r$, ist bei kleinen Wechselaussteuerungen von 4 mA/cm, $\mu 4$, $\geq 30\,000$;
- die reversible Permeabilität, also die relative Permeabilität bei Gleichfeldaussteuerung mit H = 250 mA/cm und überlagerter kleiner Wechselfeldaussteuerung, $\mu rev$, ist $\geq 3000$;
- die Induktion mit Wechsel feldstärke, B, bei einer Frequenz von 50 Hz und einer Amplitude von 50 mA/cm beträgt B $\geq 0,6$ T.

Die erste Bedingung, auch als erster Garantiewert bezeichnet, wird bei 50 Hz Wechselspannung ohne eine Gleichrichteranordnung ermittelt, also bei Wechselströmen und nicht bei pulsierenden Strömen, sei es infolge von Einweg- oder Doppelweggleichrichtung. Die anderen Bedingungen bzw. Garantiewerte werden bei den angegebenen Bedingungen ermittelt.

Ein DI-Schalter mit einem Summenstromwandler, der die angegebenen Bedingungen erfüllt, wird in seinem Auslöseverhalten durch überlagerte Gleichfehlerströme nicht unzulässig beeinträchtigt. Andererseits kann ein DI-Schalter nach einem Konstruktionsprinzip auf verschiedene Nennfehlerströme in einem weiten Bereich von insbesondere 30 mA bis 3 A eingestellt werden. Ein weiterer Vorteil besteht darin, daß sich DI-Schalter als Erfassungseinheit für Wechselfehlerströme und pulsierende Gleichfehlerströme und als Erfassungseinheiten für glatte Gleichfehlerströme spezialisieren lassen, wobei im Auslösebereich keine unzulässige gegenseitige Beeinflussung auftritt, so daß vorgegebene Auslösefehlerströme von der jeweils zuständigen Erfassungseinheit eingehalten werden können.

Um die Auslösefehlerströme zwischen + 85° C und - 25° C für die Praxis ausreichend konstant zu halten, ist es vorteilhaft, die Bedingungen nach Anspruch 2 zu erfüllen. Zwischen der Induktion B bei + 25° C, B+25, und der Induktion B bei - 25°C, B-25, sowie der Induktion B bei + 85° C, B+85, sollten hierzu die Beziehungen bestehen:

$$0,85 \leq \frac{B\text{-}25}{B\text{+}25} \leq 1,15$$

$$0,85 \leq \frac{B\text{+}85}{B\text{+}25} \leq 1,15.$$

Diese Beziehung soll in einem Bereich der Feldstärke $\hat{H}$: 4 mA/cm $\leq \hat{H} \leq$ 400 mA/cm - bestehen.

Die Erfindung soll nun anhand der Zeichnung näher erläutert werden:

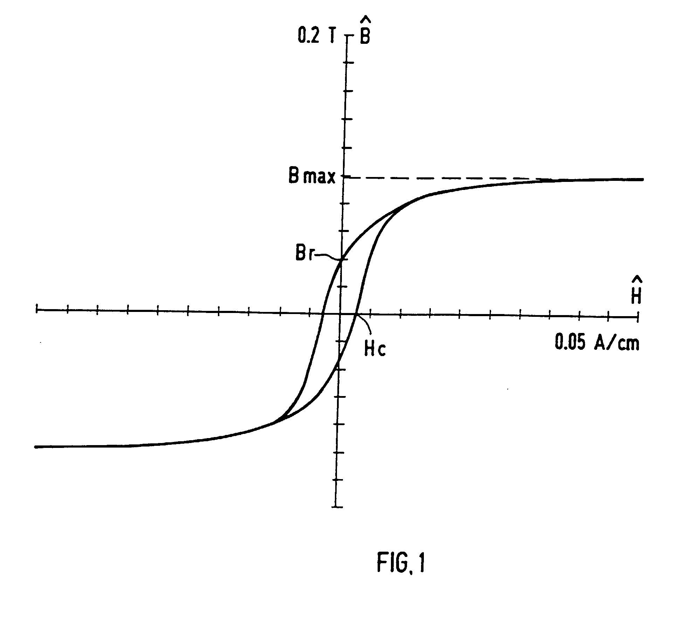

In FIG 1 ist ein Diagramm wiedergegeben, bei dem auf der Abszisse die Feldstärke $\hat{H}$ in der Einheit von 0,05 A/cm abgetragen ist und auf der Ordinate die Induktion B in der Einheit von 0,2 T.

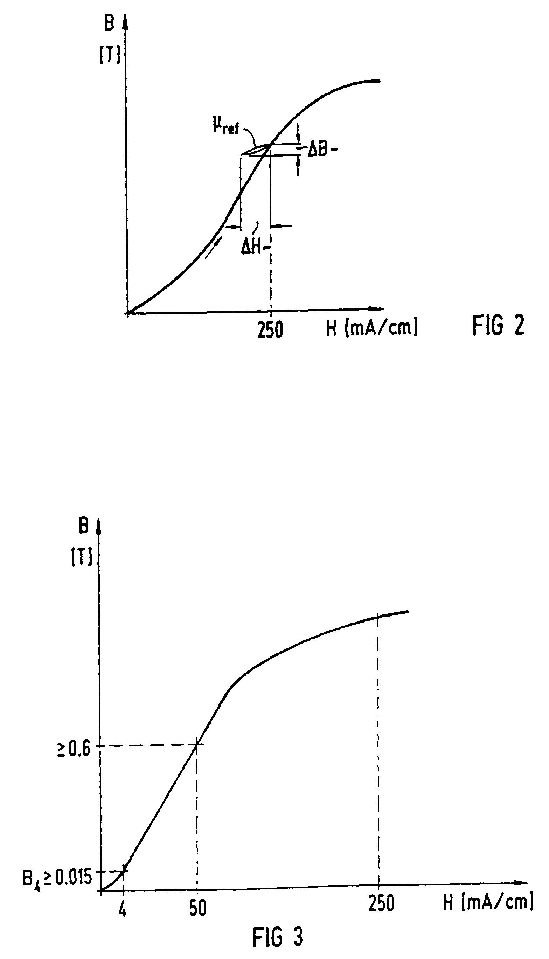

In FIG 2 ist die reversible Permeabilität, also die relative Permeabilität bei Gleichfeldaussteuerung mit einer Feldstärke von 250 mA/cm und überlagerter kleiner Wechselfeldaussteuerung, $\mu rev$, veranschaulicht. Auf der Abszisse ist die Gleichfeldstarke $H_=$ und auf der Ordinate die Induktion B abgetragen. Die reversible Permeabilität $\mu rev$ ergibt sich als Quotient von $\Delta B\sim$ zu $\Delta H\sim$.

In FIG 3 ist ein Diagramm dargestellt, auf dessen Abszisse die Feldstärke H in mA/cm und auf der Ordinate die Induktion B in T aufgetragen ist. Der untere Wert der Diagrammkurve bei 4 mA/cm veranschaulicht die zweite Bedingung nach Patentanspruch 1, der obere Wert bei 250 mA/cm die dritte Bedingung und der mittlere Wert bei 50 mA/cm die vierte Bedingung. Die Kurve erlaubt Interpolationen für Zwischenwerte.

Bei einem DI-Schalter mit einem Summenstromwandler aus dem Kernmaterial nach den angegebenen Bedingungen sorgt die erste Bedingung, $\frac{Br}{Bmax} \leq 0,5$, in Verbindung mit der zweiten Bedingung für $\mu4$ für sicheres Auslösen bei kleinen Nennfehlerströmen und die dritte Bedingung in Verbindung mit der vierten Bedingung für sicheres Auslösen bei großen Nennfehlerströmen. Die zweite Bedingung sorgt im Hinblick auf die übliche Diodenspannung von 0,7 V - und beispielsweise antiparallelen Dioden als Überspannungsschutz - für Stoßstromfestigkeit.

Im Diagramm nach FIG 1 ist die magnetische Induktion $\hat{B}$ über der Feldstärke $\hat{H}$ aufgetragen. Die Kurve ist bei einer Wechselaussteuerung mit 50 Hz aufgenommen. Sie veranschaulicht die erste Bedingung, wonach $\frac{Br}{Bmax} \leq 0,5$ ist. Die Feldstärke ist bei kleinen Primärwindungen, insbesondere bei lediglich einem durchgesteckten Leiter, also N1 = 1, und bei den in der Praxis bei höheren Nennfehlerströmen, wie beispielsweise Jn = 400 A, erforderlichen großen Ringkernen sehr klein, d. h. man erhält nur eine kleine Induktion B. Damit der Auslösefehlerstrom unabhängig von der Vormagnetisierung durch glatten Gleichstrom wird, ist ein Kernmaterial vom sogenannten Typ F-Material mit $\frac{Br}{Bmax} \leq 0,5$ zu wählen. Dem Beispiel nach FIG 1 liegt ein Kernmaterial mit den nachstehenden Werten zugrunde: Hierbei ist die Koerzitivfeldstärke (Schnitt mit der Abszisse) mit Hc, die Remanenzinduktion mit Br, die Scheitefeldstärke mit $\hat{H}$ und der Scheitelwert der Induktion mit $\hat{B}$ wiedergegeben. Der Querschnitt des Ringkerns ist mit $A_{Fe}$, die Eisenweglänge mit $l_{Fe}$, die Frequenz mit f und die Windungszahlen primärseitig mit N1 und sekundärseitig mit N2 bezeichnet. Der Ringkerndurchmesser ist außen mit da und innen mit di, seine Höhe mit h und die Meßtemperatur mit t bezeichnet. Eine Überlagerung durch Gleichstrom liegt nicht vor. Der FIG 1 zugrunde liegende Ringkern weist beispielsweise die Daten auf:

$H_c$ = 0,0254 A/cm
$Br$ = 0,3793 T
$\hat{H}_{max}$ = 0,4998 A/cm
$\hat{B}_{max}$ = 0,9947 T
$A_{Fe}$ = 0,945 cm$^2$
$l_{Fe}$ = 24,19 cm
f = 50 Hz
$N_1$ = 10
$N_2$ = 10
$d_a$ = 8,40 cm
$d_i$ = 7,00 cm
h = 1,50 cm
t = 23° C

Es ergibt sich hierbei $\frac{Br}{Bmax}$ = 0,38.

In FIG 2 ist die dritte Garantiebedingung für die reversible Permeabilität, $\mu$rev, veranschaulicht. Die reversible Permeabilität ergibt sich als Quotient aus $\Delta B\sim$ zu $\Delta H\sim$. Bei hohen Gleichfehlerströmen bzw. hohen Gleichfeldstärken und kleinen überlagerten Wechselfehlerströmen, wird das Material im Bereich der Sättigung betrieben. Die reversible Permeabilität, der Quotient $\Delta B\sim$ zu $\Delta H\sim$ nimmt für zunehmende Gleichfeldstärken $H_=$ ab. Damit in einem Arbeitspunkt mit großer Gleichfeldstärke ein ausreichend großes Signal bei Wechselfehlerströmen zur Verfügung steht, sollte die reversible Permeabilität in diesem Arbeitspunkt ausreichend groß sein. Für große Nennfehlerströme in der Größenordnung von 3000 mA bzw. 3 A und einer Auslöseschwelle für Wechselstrom zwischen 1,5 und 3,0 A ist die Einhaltung der dritten Bedingung für die reversible Permeabilität besonders dann angezeigt, wenn die Sekundärwicklung des Wandlers niederohmig beschaltet ist und trotz einem großen Wert für die primäre Amperewindungszahl, die Primärdurchflutung, nur eine geringe Wechselaussteuerung erreicht wird.

Im Diagramm nach FIG 3 gibt der Verlauf der Kurve bei einer Feldstärke H von 250 mA/cm die dritte Bedingung, also für die reversible Permeabilität, wieder und für die Feldstärke von 4 mA/cm die zweite Bedingung, also für $\mu4$, wieder. Die vierte Bedingung wird durch den mittleren Kurvenwert für B $\geq$ 0,6 T veranschaulicht. Die Steigung der Kurve ist gemäß der Beziehung $\frac{\Delta B}{\Delta H}$ proportional zu $\mu$rev $\cdot$ $\mu0$, wobei $\mu0$ die magnetische Feldkonstante bzw. Induktionskonstante ist.

Nach FIG 3 ist die B-H-Kennlinie für eine Wechselaussteuerung bei 50 Hz aufgenommen. Eine derartige Kennlinie ist meßtechnisch leichter aufzunehmen und gibt die statischen Verhältnisse dann besonders gut wider, wenn vorteilhafterweise nanokristalline Kernmaterialien verwendet werden, die in sehr dünnen Bändern aufgewickelt werden können. Die Wirbelstromverluste bei 50 Hz können dann vernachlässigt werden. Die Kennlinie nach FIG 3 stimmt dann mit einer langsam durchfahrenen B-H-Kennlinie überein. Summenstromwandler aus einem Kern aus nanokristallinem Material, das in dünnen Bändern aufgewickelt ist, sind auf dem Markt. Die hier erläuterten Bedingungen sind in Verbindung mit derartigem Material besonders vorteilhaft und am leichtesten zu realisieren.

**Patentansprüche**

1. Differenzstromschutzschalter, DI-Schalter, der mit Summenstromwandler und Auslöseeinrichtung in einem Sekundärkreis an der Sekundärwicklung des Summenstromwandlers arbeitet, wobei im Primärkreis die durch Schaltkontakte zu schützenden Leiter angeordnet sind,
   **dadurch gekennzeichnet,**
   daß der Summenstromwandler aus einem Kernmaterial mit folgenden Werten besteht:

   - die Remanenzinduktion nach Erregung mit $\hat{H}$ = 500 mA/cm, Br, steht zur Induktion bei $\hat{H}$ = 500 mA/cm, Bmax, in der Beziehung $\frac{Br}{Bmax} \leq 0,5$;

- die relative Permeabilität, µr, ist bei kleinen Wechselaussteuerungen von 4 mA/cm, µ4: µ4 ≥ 30 000;
- die reversible Permeabilität, also die relative Permeabilität bei Gleichfeldaussteuerung mit H = 250 mA/cm und überlagerter kleiner Wechselfeldaussteuerung, µrev, ist µrev ≥ 3000;
- die Induktion mit Wechsel feldstärke, B, bei einer Frequenz von 50 Hz und einer Amplitude von 50 mA/cm beträgt B ≥ 0,6 T.

**2.** DI-Schalter nach Anspruch 1,
**dadurch gekennzeichnet,**
daß zwischen der Induktion B bei etwa + 25° C, B+25, und der Induktion B bei - 25° C, B-25, sowie der Induktion B bei + 85°C, B+85, in einem Bereich der Feldstärke $\hat{H}$: 4 mA/cm ≤ $\hat{H}$ ≤ 400 mA/cm - die Beziehungen bestehen

$$0,85 \leq \frac{B\text{-}25}{B\text{+}25} \leq 1,15$$

$$0,85 \leq \frac{B\text{+}85}{B\text{+}25} \leq 1,15.$$

**3.** DI-Schalter nach Anspruch 1 oder 2,
**dadurch gekennzeichnet,**
daß der Summenstromwandler einen Kern aus nanokristallinem Material aufweist, das in dünnen Bändern aufgewickelt ist.

## Claims

**1.** Residual-current circuit breaker, termed a DT circuit breaker, which employs a summation current transformer and tripping device in a secondary circuit on the secondary winding of the summation current transformer, the conductors to be protected by the switching contacts being disposed in the primary circuit, characterized in that

- the remanence induction, Br, after excitation with $\hat{H}$ = 500 mA/cm is related to the induction, Bmax, at $\hat{H}$ = 500 mA/cm by $\frac{Br}{Bmax} \leq 0.5$;
- the relative permeability, µr, for small alternating drives of 4 mA/cm is µ4: µ4 ≥ 30,000;
- the reversible permeability, µrev, that is to say the relative permeability for direct-field drive with H = 250 mA/cm and superimposed small alternating-field drive is µrev ≥ 3000;
- the induction, B, with alternating-field strength at a frequency of 50 Hz and an amplitude of 50 mA/cm is B ≥ 0.6 T.

**2.** DI circuit breaker according to Claim 1, characterized in that between the induction B at approximately +25°C, B+25, and the induction B at -25°C, B-25, and also the induction B at +85°C, B+85, the following relationships should exist, in a field-strength range $\hat{H}$: 4 mA/cm ≤ $\hat{H}$ ≤ 400 mA/cm:

$$0.85 \leq \frac{B\text{-}25}{B\text{+}25} \leq 1.15$$

$$0.85 \leq \frac{B\text{+}85}{B\text{+}25} \leq 1.15$$

**3.** DI circuit breaker according to Claim 1 or 2, characterized in that the summation current transformer has a core of nanocrystalline material which has been wound up in thin strips.

## Revendications

**1.** Interrupteur de protection différentielle. qui fonctionne avec un transformateur de courant principal et un dispositif de déclenchement dans un circuit secondaire sur l'enroulement secondaire du transformateur de courant principal, les conducteurs à protéger par des contacts de commutation étant disposés dans le circuit primaire,
**caractérisé** en ce que le transformateur de courant principal est constitué d'un matériau de noyau respectant les valeurs suivantes :

- l'induction résiduelle, après une excitation avec $\hat{H}$ = 500 mA/cm, Br respecte, pour l'induction, à $\hat{H}$ = 500 mA/cm, Bmax, la relation suivante : Br/Bmax ≤ 0,5 ;
- la perméabilité relative µr est, pour de petites modulations alternatives de 4 mA/cm (µ4), µ4 ≥ 30 000 ;
- la perméabilité réversible prev, c'est-à-dire la perméabilité relative pour une modulation à champ continu avec H = 250mA/cm et une petite modulation superposée de champ alternatif, est µrev ≥ 3000 ;
- l'induction avec intensité de champ alternatif, B, pour une fréquence de 50 Hz et une amplitude de 50 mA/cm, est de B ≥ 0,6 T.

**2.** Interrupteur de protection différentielle selon la revendication 1, **caractérisé** en ce que les relations suivantes existent entre l'induction B à environ + 25°C, B+25, l'induction B à - 25°C, B-25, et l'induction B à + 85°C, B+85, dans une plage d'intensité de champ $\hat{H}$ 4 mA/cm ≤ $\hat{H}$ ≤ 400 mA/cm :

$$0,85 \leq B\text{-}25/B\text{+}25 \leq 1,15$$

$$0,85 \leq B\text{+}85/B\text{+}25 \leq 1,15.$$

3. Interrupteur de protection différentielle selon la revendication 1 ou 2, **caractérisé** en ce que le transformateur de courant principal comporte un noyau en matériau nanocristallin, qui est enroulé en minces bandes.

FIG, 1

FIG 2

FIG 3